## Europäisches Patentamt

## European Patent Office

## Office européen des brevets

(11) Veröffentlichungsnummer: **0 099 514**
**B1**

(12) **EUROPÄISCHE PATENTSCHRIFT**

(45) Veröffentlichungstag der Patentschrift:
04.09.85

(21) Anmeldenummer: 83106600.6

(22) Anmeldetag: 06.07.83

(51) Int. Cl.⁴: **C 01 B 25/238**, C 22 B 3/00

(54) Verfahren zur Entfernung von Schwermetallionen und Arsen aus Nassverfahrensphosphorsäure.

(30) Priorität: 21.07.82 DE 3227202

(43) Veröffentlichungstag der Anmeldung:
01.02.84 Patentblatt 84/5

(45) Bekanntmachung des Hinweises auf die Patenterteilung:
04.09.85 Patentblatt 85/36

(84) Benannte Vertragsstaaten:
AT BE CH DE FR GB IT LI NL SE

(56) Entgegenhaltungen:
EP - A - 0 070 415
EP - A - 0 078 051
DE - B - 2 447 390

Soviet Inventions Illustrated Week K 03, 2 March 1983,
Sections C 04, E 36, J 01
Soviet Inventions Illustrated, Week D 38, 28 October
1981, Sections C 04, E 36, (E 11)

(73) Patentinhaber: HOECHST AKTIENGESELLSCHAFT,
Postfach 80 03 20, D-6230 Frankfurt am Main 80 (DE)

(72) Erfinder: Schimmel, Günther, Dr., Ehrenstrasse 16,
D-5042 Erftstadt (DE)
Erfinder: Gradl, Reinhard, Dr., Am grünen Weg 6,
D-5030 Hürth (DE)
Erfinder: Heymer, Gero, Dr., Fasanenaue 12,
D-5042 Erftstadt (DE)

ACTORUM AG

## Beschreibung

Die vorliegende Erfindung betrifft ein Verfahren zur Entfernung von Schwermetallionen und Arsen aus Nassverfahrensphosphorsäure, indem man bei Temperaturen zwischen 10 und 100° C die rohe Nassverfahrensphosphorsäure zunächst mit einem Diorganyldithiophosphorsäureester und anschliessend mit einem Adsorptionsmittel behandelt und danach die gereinigte Phosphorsäure von dem Ester und dem Adsorptionsmittel abtrennt.

Durch Aufschluss von Phosphaterzen mit Mineralsäuren gewonnene Rohphosphorsäuren enthalten in der Regel als Verunreinigungen neben Ionen von Schwermetallen, wie Cadmium, Kupfer, Blei und Quecksilber, auch Ionen des Arsens.

Häufig ist es erforderlich, ausser den Schwermetallionen auch das Arsen aus diesen Phosphorsäuren zu entfernen, da es bei der weiteren Verwendung der Phosphorsäure stören kann. Z.B. wird bei einer anschliessenden Phosphorsäure-Extraktionsreinigung mit Hilfe organischer Lösungsmittel das Arsen nicht mit abgetrennt, was einer direkten Verwendung dieser so gereinigten Säure im Lebensmittelbereich oder im Wasch- und Reinigungsmittelsektor entgegensteht.

Das üblicherweise angewendete Verfahren zur Abtrennung von Arsen aus Phosphorsäure ist dessen Ausfällung mit überschüssigem Schwefelwasserstoff als Arsensulfid (DE-B-2447390). Bei solchen Verfahren muss die Rohsäure mit einem grossen Überschuss an Alkalisulfid-Lösung in einem geeigneten Reaktor, z.B einer Begasungskolonne, behandelt und anschliessend vom überschüssigen $H_2S$ durch Strippen mit Inertgas befreit werden. Die Filtration des feinteiligen Arsensulfids kann nur durch Zugabe eines Filterhilfsmittels bewerkstelligt werden. Wegen der grossen Menge an freigesetztem Schwefelwasserstoff-Gas muss die gesamte Apparatur gasdicht ausgeführt werden.

Insgesamt sind die bisher beschriebenen Verfahren zur Abtrennung von Arsen als Arsensulfid apparatemässig aufwendig, kostenintensiv im Materialverbrauch sowie insbesondere von potentieller Gefährlichkeit wegen der grossen Mengen an freigesetztem $H_2S$. Eine Abtrennung des Cadmiums ist auf diesem Weg nicht möglich.

Man hat daher gemäss der deutschen Patentanmeldung DE-A-3127900 schon versucht, auf dem Wege einer flüssig/flüssig Extraktion von Phosphorsäuren, die von emulsionsbildenden Stoffen vorher befreit sein mussten, mit Hilfe von Diorganyldithiophosphorsäureestern Schwermetalle und Arsen gemeinsam zu entfernen, was aber bezüglich des Arsens nur zum Teil gelungen ist.

Ferner ist gemäss der deutschen Patentanmeldung DE-A-3202658, die Entfernung von Schwermetallionen aus rohen, sogenannten «schwarzen» Nassverfahrensphosphorsäuren durchgeführt worden, indem man diese Säuren bei Temperaturen zwischen 10 und 100° C entweder mit einem Gemisch bestehend aus einem Adsorptionsmittel und einem Organyldithiophosphorsäureester oder nach Behandlung der Säure mit Ester mit dem Adsorptionsmittel allein in Kontakt bringt und die gereinigte Säure vom Ester und Adsorptionsmittel trennt.

Dabei hat sich jedoch gezeigt, dass sich für die Entfernung der Schwermetallionen (Cadmium, Kupfer, Blei und Quecksilber) einerseits und von Arsen andererseits keine gleich guten Ergebnisse erzielen lassen.

Überraschenderweise wurde nun gefunden, dass sich dieser Nachteil leicht beheben lässt, wenn man bei dem eingangs geschilderten Verfahren die Behandlung der Nassverfahrensphosphorsäure mit dem Diorganyldithiophosphorsäureester bei Temperaturen grösser als 50° C, vorzugsweise zwischen 55 und 75° C, und die Behandlung mit dem Adsorptionsmittel bei Temperaturen kleiner als 50° C, vorzugsweise zwischen 25 und 40° C durchführt.

Die benötigte Menge Dithiophosphorsäureester und Adsorptionsmittel ist von der verwendeten Rohphosphorsäure abhängig. Im allgemeinen genügen 0,05-0,3% Ester und 0,1-2% Adsorptionsmittel, jeweils bezogen auf das Gewicht der Phosphorsäure. Die Verweilzeit in jeder Behandlungsstufe sollte mindestens 15 min, vorzugsweise 30-60 min betragen.

An Diorganyldithiophosphorsäureestern kommen solche in Frage, in deren allgemeiner Formel $(RO)_2PSSH$ R = Alky, Cycloalkyl, Alkenyl, substituiertes Alkyl, Aryl, Alkaryl oder Aralkyl ist. Besonders geeignet sind solche mit Alkylresten der Kettenlänge $C_4$-$C_{12}$. Als Adsorptionsmittel kommt jeder Feststoff in Betracht, der in der Lage ist, das Thioester/Schwermetallgemisch aus der Phosphorsäureemulsion in einem Filterkuchen zurückzuhalten. Hierzu sind besonders silikatische Materialien wie Kieselgur, Perlit oder synthetische Kieselsäure, aber auch überwiegend aus Kohlenstoff bestehende Adsorbentien wie Aktivkohlen oder Russe geeignet.

In den folgenden Beispielen wird die Erfindung näher beschrieben, ohne dadurch den Gegenstand der Erfindung auf den Inhalt der Beispiele einschränken zu wollen.

Die Umsetzung wird jeweils in einer zweistufigen, separat beheizbaren Rührbehälterkaskade durchgeführt, wobei die Flüssigkeit vom Boden jedes Reaktors über einen Syphon abläuft. Beide Behälter besitzen ein Volumen von einem Liter. In den ersten Reaktor werden stündlich 2 l Rohphosphorsäure sowie eine bestimmte Menge an Dialkyldithiophosphorsäureester $(RO)_2PSSH$ gepumpt; in den zweiten Reaktor wird diskontinuierlich alle 5 min eine definierte Menge an Adsorptionsmittel eingerührt. Die Maische fliesst auf eine Vakuum-Filternutsche von 20 cm Durchmesser und wird in Feststoff und gereinigte Phosphorsäure getrennt. Das Filtrat ist jeweils frei von Dithiophosphorsäureester.

Die Ergebnisse sind in den folgenden Tabellen zusammengefasst.

*Daten der Rohsäuren:*

|  | Beispiel 1-4 | Beispiel 5-7 |
|---|---|---|
| Gew% $P_2O_5$ | 50,3 | 51,2 |
| Gew% $SO_4$ | 0,7 | 2,1 |
| ppm $C_{org.}$ | 190 | 450 |
| ppm Cd | 22 | 25 |
| ppm As | 9 | 11 |

Wie die Vergleichsbeispiele 1 und 2 zeigen, ist bei gleicher Temperatur in beiden Reaktoren entweder die Abreicherung an Schwermetallionen oder die an Arsen unbefriedigend.

| Beispiel | Menge Thioester (ml/h) | Adsorbens | | Temperaturen (°C) | | ppm in gereinigter Säure (Filtrat) | | |
|---|---|---|---|---|---|---|---|---|
| | | Typ | Menge (g/h) | Reaktor 1 | Reaktor 2 | Cd | As | $C_{org.}$ |
| 1 | 3 | Kieselgur | 16 | 60 | 60 | 7 | <1 | 200 |
| 2 | 5 | Kieselgur | 32 | 20 | 20 | <1 | 5 | 190 |
| 3 | 3 | Kieselgur | 16 | 60 | 30 | 1 | <1 | 180 |
| 4 | 4 | Perlit | 24 | 70 | 35 | <1 | <1 | 190 |
| 5 | 5 | Perlit | 32 | 70 | 35 | <1 | <1 | 330 |
| 6 | 5 | Kieselgur | 32 | 60 | 30 | <1 | 1 | 360 |
| 7 | 5 | Kieselgur | 32 | 60 | 30 | 1 | <1 | 340 |

Versuch 1-5:  R in $(RO)_2PSSH$ = 2-Ethylhexyl
Versuch 6:  R in $(RO)_2PSSH$ = i-Amyl
Versuch 7:  R in $(RO)_2PSSH$ = n-Dodecyl

## Patentansprüche

1. Verfahren zur Entfernung von Schwermetallionen und Arsen aus Nassverfahrensphosphorsäure, indem man bei Temperaturen zwischen 10 und 100° C die rohe Nassverfahrensphosphorsäure zunächst mit einem Diorganyldithiophosphorsäureester und anschliessend mit einem Adsorptionsmittel behandelt und danach die gereinigte Phosphorsäure von dem Ester und dem Adsorptionsmittel abtrennt, dadurch gekennzeichnet, dass man die Behandlung der Nassverfahrensphosphorsäure mit dem Diorganyldithiophosphorsäureester bei Temperaturen grösser als 50° C und die Behandlung mit dem Adsorptionsmittel bei Temperaturen kleiner als 50° C durchführt.

2. Verfahren nach Anspruch 1, dadurch gekennzeichnet, dass man die Behandlung mit dem Ester bei Temperaturen zwischen 55 und 75° C und die Behandlung mit dem Adsorptionsmittel bei Temperaturen zwischen 25 und 40° C durchführt.

## Claims

1. Process for removing heavy metal ions and arsenic from wet-processed phosphoric acid, wherein the crude wet-processed phosphoric acid is treated at temperatures between 10 and 100° C initially with a diorganyldithiophosphoric acid ester and then with an adsorbent, and the phosphoric acid so purified is separated from the ester and adsorbent, which comprises: treating the wet-processed phosphoric acid with the diorganyldithiophosphoric acid ester at temperatures higher than 50° C and with the adsorbent at temperatures lower than 50° C.

2. Process as claimed in Claim 1, wherein the treatment with the ester is effected at temperatures between 55 and 75° C and the treatment with the adsorbent is effected at temperatures between 25 and 40° C.

## Revendications

1. Procédé pour l'extraction d'ions de métaux lourds et d'arsenic d'acide phosphorique humide, dans lequel on traite l'acide phosphorique humide brut à des températures comprises entre 10 et 100° C d'abord par un diester organique d'acide dithiophosphorique et ensuite par un adsorbant et on sépare enfin l'acide phosphorique purifié de l'ester et de l'adsorbant, caractérisé en ce que l'on effectue le traitement de l'acide phosphorique humide par le diester organique d'acide dithiophosphorique à des températures supérieures à 50° C et on effectue le traitement par l'adsorbant à des températures inférieures à 50° C.

2. Procédé selon la revendication 1, caractérisé en ce que l'on effectue le traitement par l'ester à des températures comprises entre 55 et 75° C et on effectue le traitement par l'adsorbant à des températures comprises entre 25 et 40° C.